# EUROPÄISCHE PATENTANMELDUNG

(11) **EP 3 907 022 A1**
(43) Veröffentlichungstag der Anmeldung: **10.11.2021**
(21) Anmeldenummer: 20173706.1
(22) Anmeldetag: 08.05.2020
(51) Int. Cl.: B22F 3/105, B22F 5/00, B22F 3/00, H02K 15/02

(54) **VERFAHREN ZUR HERSTELLUNG EINER MATERIALLAGE**

(71) Anmelder: Siemens Aktiengesellschaft, 80333 München (DE)
(72) Erfinder: Buschbeck, Jörg, 90482 Nürnberg (DE); Rieger, Gotthard, 80636 München (DE); Vollmer, Rolf, 36129 Gersfeld (DE)

(57) **Zusammenfassung**

Die Erfindung betrifft ein Verfahren zur Herstellung einer, insbesondere metallischen, Materiallage (2). Um, im Vergleich zum Stand der Technik, eine höhere Geschwindigkeit des Herstellungsverfahrens und eine bessere Kostenposition zu erreichen, wird vorgeschlagen, dass ein Grünkörper (26) bereitgestellt wird, welcher Festteilchen (28) umfasst, wobei der Grünkörper (26) bei zumindest einer Sinter-Temperatur (Ts) gesintert wird und wobei der Grünkörper (26) beim Sintern (S) zumindest teilweise mittels Mikrowellenenergie erwärmt wird.

## Beschreibung

Die Erfindung betrifft ein Verfahren zur Herstellung einer, insbesondere metallischen, Materiallage.

Ferner betrifft die Erfindung eine Materiallage für ein Blechpaket einer elektrischen rotierenden Maschine, welche nach einem derartigen Verfahren hergestellt ist.

Darüber hinaus betrifft die Erfindung eine elektrische Maschine mit einem Blechpaket, welches eine Vielzahl von Materiallagen aufweist.

Überdies betrifft die Erfindung eine Regelungseinrichtung mit Mitteln zur Durchführung eines derartigen Verfahrens.

Zudem betrifft die Erfindung ein Computerprogrammprodukt zur Durchführung eines derartigen Verfahrens bei Ablauf in einer Regelungseinrichtung.

In elektrischen Maschinen, insbesondere in Motoren und Generatoren, kommen Blechpakete aus gestapelten Elektroblechen zum Einsatz, um eine Ausbreitung von Wirbelströmen zu unterdrücken. Derartige Elektrobleche, welche beispielsweise einen weichmagnetischen Werkstoff, insbesondere Eisen, enthalten, werden üblicherweise aus gewalzten Großblechen herausgeschnitten beziehungsweise gestanzt. Anschließend werden die Bleche zu einem Blechpaket paketiert. Ein derartiges Herstellungsverfahren wird im Folgenden als konventionelles Herstellungsverfahren bezeichnet, wobei durch Walzen derzeit großtechnisch keine Bleche herstellbar sind, die eine Lagendicke von weniger als 100 µm aufweisen. Zudem fällt beim Herausschneiden bzw. Stanzen der Bleche aus den Großblechen Abfall an.

Die Offenlegungsschrift EP 3 595 148 A1 beschreibt ein Verfahren zur Herstellung einer Materiallage mit einer Lagendicke zwischen 0,5 und 500 µm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Während eines konventionellen Sinterprozesses wird Wärmeenergie durch Einkopplung mittels Infrarot-Strahlung und/oder Konvektionswärme von außen zugeführt. Diese Art der Erwärmung erfordert lange Aufheizzeiten bei hohem Energiebedarf, da sich ein System aus Ofenraum, Bauteil und Hilfsstrukturen durch Verzögerungen aufgrund von Wärmeleitung und Wärmekapazität nur langsam erwärmt. Insbesondere beim Freisintern von dünnen, insbesondere metallischen, Materiallagen, welche beispielsweise eine Lagendicke von 0,1 µm bis 1 mm mit einem hohem Aspektverhältnis aufweisen, werden zur Abstützung der mechanisch noch instabilen Grünkörper während des Sinterprozesses Hilfsstrukturen benötigt, deren Volumen und daher auch thermische Trägheit zu Temperatur-Gradienten über die Materiallagen führen.

In Materiallagen, welche Eisen oder eine Eisenbasislegierung enthalten, führen derartige Temperatur-Gradienten zur Ausbildung einer unvollständig verdichteten beziehungsweise inhomogenen Mikrostruktur, welche funktional ungünstig ist, da die magnetischen Eigenschaften, insbesondere das Koerzitivfeld stark von Größe und Anordnung der Kornstruktur sowie deren inneren Grenzflächen und zusätzlich einer Anreicherung von Verunreinigungen abhängt. Um eine ausreichende Dichte und Homogenität der Mikrostruktur zu erreichen sind, insbesondere aufgrund der durch ein Siebdruckverfahren fehlenden Vorverdichtung, sehr lange Haltezeiten im konventionellen Sinterprozess erforderlich. Gleichzeitig ist die zusätzlich erforderliche Energie zur Erwärmung von Hilfsstrukturen derartig signifikant, dass das Sintern von dünnen, insbesondere metallischen, Materiallagen mittels des beschriebenen konventionellen Sinterprozesses aus Zeit- und Kostengründen nicht wirtschaftlich ist.

Die Offenlegungsschrift EP 1 721 699 A1 beschreibt ein Verfahren zur Herstellung eines metallischen Bauteils, umfassend die Bereitstellen eines Körpers, der aus einer ersten Legierung hergestellt ist, die Bereitstellen einer Vorform, die ein Metallpulver umfasst, das aus einer zweiten Legierung hergestellt und in Form einer Verlängerung des Körpers geformt ist und das Erhitzen der Vorform mit Mikrowellenenergie, um das Metallpulver zusammen zu sintern und die Vorform mit dem Körper zu verbinden.

Der Erfindung liegt die Aufgabe zugrunde, ein Verfahren zur Herstellung einer, insbesondere metallischen, Materiallage anzugeben, das im Vergleich zum Stand der Technik, schneller und kostengünstiger ist.

Die Aufgabe wird erfindungsgemäß durch ein Verfahren zur Herstellung einer, insbesondere metallischen, Materiallage gelöst, wobei ein Grünkörper bereitgestellt wird, welcher Festteilchen umfasst, wobei der Grünkörper bei zumindest einer Sinter-Temperatur gesintert wird und wobei der Grünkörper beim Sintern zumindest teilweise mittels Mikrowellenenergie erwärmt wird.

Ferner wird die Aufgabe erfindungsgemäß gelöst durch eine Materiallage für ein Blechpaket einer elektrischen rotierenden Maschine, welche nach einem derartigen Verfahren hergestellt ist, wobei die Materiallage aus einem metallischen Werkstoff hergestellt ist und eine Dichte von zumindest 85 %, insbesondere zumindest 90 %,des zugehörigen schmelzmetallurgisch hergestellten metallischen Werkstoffs aufweist.

Überdies wird die Aufgabe erfindungsgemäß gelöst durch eine elektrische Maschine mit einem Blechpaket, welches eine Vielzahl von Materiallagen aufweist.

Zudem wird die Aufgabe erfindungsgemäß gelöst durch ein Computerprogrammprodukt zur Durchführung eines derartigen Verfahrens bei Ablauf in einer Regelungseinrichtung.

Die in Bezug auf das Verfahren nachstehend angeführten Vorteile und bevorzugten Ausgestaltungen lassen sich sinngemäß auf die Materiallage, die elektrische Maschine und die Regelungseinrichtung übertragen.

Der Erfindung liegt die Überlegung zugrunde, den Sintervorgang von Materiallagen, welche beispielsweise in Blechpaketen von elektrischen Maschinen verwendbar sind, durch Zuführung von Mikrowellenenergie zu beschleunigen, um einen höheren Durchsatz zu erzielen. Eine derartige Materiallage weist im fertig gesinterten Zustand ein Aspektverhältnis, das heißt ein Verhältnis von maximaler Länge zu Lagendicke, von mindestens 50:1, insbesondere von 100:1, auf. Beispielsweise hat die Materiallage eine Lagendicke im Bereich von 0,1 µm bis 1 mm, insbesondere von 0,5 µm bis 500 µm. Die Materiallage weist, insbesondere metallische, Festteilchen auf, welche beispielsweise Eisen, Nickel, Kobalt und/oder deren Legierungen, enthalten und ist beispielsweise durch Pressen oder Siebdrucken herstellbar. Die Festteilchen liegen beispielsweise als Legierungspulver oder als Mischungen von Pulvern aus Reinelementen vor.

Die Mikrowellenenergie wird insbesondere durch eine Mikrowellenquelle zugeführt, die beispielsweise als Magnetron ausgeführt ist. Die Mikrowellenquelle erzeugt elektromagnetische Schwingungen, welche beispielsweise in einem Frequenzbereich von 300 MHz bis 300 GHz liegen. Insbesondere werden elektromagnetische Schwingungen mit Frequenzen erzeugt, die in einem ISM-Band (industrial, scientific and medical application band), beispielsweise bei 915 MHz +/- 13 MHz, 2,45 GHz +/-50 MHz oder 5,8 GHz +/- 75 MHz, liegen. Optional wird zusätzliche Energie über eine weitere Wärmequelle, beispielsweise über Heizstäbe, zugeführt.

Die Zuführung von Mikrowellenenergie führt zu einem beschleunigten Verdichtungsprozess. Insbesondere zu Beginn des Sintervorgangs, bei dem sich der Grünkörper in einem poröseren Zustand befindet und einen hohen elektrischen Widerstand aufweist, erfolgt eine maximale Einkopplung der Mikrowellenenergie, was bedeutet, dass eine geringere Aufheizzeit und eine schnelle Erstverdichtung erreicht wird. Die geringere Aufheizzeit führt auch mit Prozessgasen geringerer Reinheit zu wenig Oxidation und damit zu wenig Verunreinigung im Sintergut, was beispielsweise zu verbesserten magnetischen Eigenschaften führt und Kostenvorteile bietet.

Ferner sind aufgrund der selektiven Erwärmung durch die Mikrowellen, Träger- und/oder Haltestrukturen für den Grünkörper, welche beispielsweise aus Quarzglas hergestellt sind, im Wesentlichen Mikrowellen-transparent und tragen nicht zum Energieverbrauch bei. Darüber hinaus werden durch die Mikrowellenenergie, aufgrund einer im Volumen gleichmäßigen Verdichtung, weniger Poren und eine homogenere Korngröße im Vergleich zu einem rein konventionellen Sinterprozesses erreicht, was sich in verbesserten mikrostrukturellen, geometrischen und mechanischen Eigenschaften des Sinterguts wiederspiegelt. Bei einer Materiallage aus einem metallischen Werkstoff, wie beispielsweise Eisen oder einer Eisenlegierung, wird eine Dichte von zumindest 85 %, insbesondere zumindest 90 %, des zugehörigen schmelzmetallurgisch hergestellten metallischen Werkstoffs erreicht. Durch die Materialselektivität ist überdies eine verbesserte Ausbildung von Grenzflächen erzielbar.

Die Regelungseinrichtung regelt insbesondere die zumindest eine Sinter-Temperatur. Die Mittel der Regelungseinrichtung zur Durchführung des Sintervorgangs umfassen beispielsweise eine Steuervorrichtung, einen Sollwertgeber und einen Speicher. Insbesondere weist die Regelungseinrichtung einen digitalen Logikbaustein auf, der für das Herstellungsverfahren konfiguriert ist. Der digitale Logikbaustein ist beispielswiese als Mikroprozessor, Mikrocontroller, FPGA (field programmable gate array) oder ASIC (application-specific integrated circuit) ausgeführt. Das erfindungsgemäße Computerprogrammprodukt ist zumindest zur Regelung der Sinter-Temperatur konfiguriert. Darüber hinaus kann das Computerprogrammprodukt einen digitalen Zwilling umfassen, der zumindest ein Temperaturverhalten des Sinterguts, insbesondere bei einer Zuführung von Mikrowellenenergie, abbildet. Ein derartiger digitaler Zwilling ist beispielsweise in der Offenlegungsschrift US 2017/0286572 A1 beschrieben. Der Offenbarungsgehalt der US 2017/0286572 A1 wird durch Verweisung in die vorliegende Anmeldung mit einbezogen.

Eine weitere Ausführungsform sieht vor, dass der Grünkörper, der zusätzlich ein Bindemittel umfasst, bei zumindest einer Entbinder-Temperatur entbindert und in einem folgenden Schritt bei zumindest einer Sinter-Temperatur gesintert wird, wobei die Sinter-Temperatur höher als die Entbinder-Temperatur ist, wobei der Grünkörper beim Entbindern und beim Sintern zumindest teilweise mittels Mikrowellenenergie erwärmt wird. Insbesondere bilden die Festteilchen zusammen mit dem Bindemittel eine Suspension zur Herstellung des Grünköpers. Beispielsweise wird ein organisches Bindemittel verwendet, das so beschaffen ist, dass es bei Erwärmung vollständig bzw. nahezu vollständig in gasförmige Bestandteile dissoziiert. Die Entbinder-Temperatur beträgt beispielsweise 600 bis 800°C während die Sinter-Temperatur beispielsweise bei 1200 bis 1500°C liegt. Insbesondere findet das Sintern unmittelbar nach dem Entbindern statt, um Zeit zu sparen. Neben der geringeren Aufheizzeit während des Sinterns und Entbinderns reduziert eine Zuführung von Mikrowellenenergie eine Oxidation und damit eine Verunreinigung des Grünkörpers, was beispielsweise bei Belchen zu besseren magnetischen Eigenschaften führt. Ferner sind Prozessgase mit geringerer Reinheit verwendbar, sodass Kosten eingespart werden.

Eine weitere Ausführungsform sieht vor, dass der Grünkörper mittels Hybriderwärmung entbindert und/oder gesintert wird. Hybriderwärmung umfasst neben einer Mikrowellenerwärmung zusätzlich eine konventionelle Erwärmung, welche beispielsweise über Induktionserwärmung, Widerstandserwärmung oder Gasbeheizung stattfindet. Insbesondere wird der Grünkörper zu Beginn vornehmlich mit Mikrowellen erwärmt, was zur Ausbildung von Sinterhälsen zwischen den Partikeln und damit zu einer deutlich besseren Wärmeleitung führt, wobei daraufhin eine zugeschaltete konventionelle Wärmequelle eine Gefügevergröberung des bereits vorverdichteten Grünkörpers übernimmt. Durch Hybriderwärmung werden der Entbinder- und Sinterprozess beschleunigt. Da Mikrowellen bei einigen Werkstoffen bei Raumtemperatur nur schlecht einkoppeln, ist durch Hybriderwärmung eine kürzere Aufheizphase erzielbar.

Eine weitere Ausführungsform sieht vor, dass der Grünkörper zumindest teilweise in einer reduzierenden Atmosphäre entbindert wird. Die reduzierende Atmosphäre enthält beispielsweise ein Wasserstoff-Stickstoff-Gemisch oder ein Wasserstoff-Edelgas-, insbesondere ein Wasserstoff-Argon-Gemisch. Der Stickstoff beziehungsweise das Edelgas fungieren als Spülgas. Insbesondere findet der Entbinder-Prozess in einer reduzierenden Atmosphäre bei einem niedrigen Druck von weniger als 100 mbar statt. Durch die reduzierende Atmosphäre werden eine Oxidation und damit Verunreinigungen verhindert. Insbesondere organische Bindemittel werden in einer reduzierenden Atmosphäre durch Entfernen der Kohlenstoffatome aus dem Grünkörper im Wesentlichen rückstandslos ausgetrieben.

Eine weitere Ausführungsform sieht vor, dass der Grünkörper zumindest teilweise in einem Vakuum gesintert wird. Durch das Vakuum wird eine schnelle Aufheizung ermöglicht.

Eine weitere Ausführungsform sieht vor, dass der Grünkörper nach einem vorgegebenen Temperaturprofil erwärmt wird, wobei eine zugeführte Wärmeenergie anhand einer Temperatur des Grünkörpers geregelt wird. Durch eine Erwärmung anhand eines Temperaturprofils wird eine reproduzierbare Qualität der Materiallagen erreicht. Insbesondere durch die Einkopplung der Mikrowellen in den Grünkörper ist eine lokale Messung der Grünkörper-Temperatur genauer als beispielsweise eine Messung der Umgebungstemperatur.

Eine weitere Ausführungsform sieht vor, dass die Temperatur des Grünkörpers kontaktlos mittels zumindest eines Sensors ermittelt wird. Der Sensor ist beispielsweise als Infrarot-Temperatursensor ausgeführt. Durch einen derartigen kontaktlosen Sensor wird eine sehr genaue Erfassung der Grünkörper-Temperatur ermöglicht. Darüber hinaus sind keine zusätzlichen metallischen Komponenten wie Zuleitungen und/oder metallische Temperaturwiderstände erforderlich, die das elektromagnetische Feld während der Mikrowellenerwärmung beeinflussen. Insbesondere sind durch eine mechanische oder optische Variation des Messfeldes ist eine Temperaturverteilung auf einem Grünkörper erfassbar. Ferner sind Temperaturen von verschieden Grünkörpern über einen derartigen kontaktlosen Sensor während des Erwärmungsvorgangs erfassbar.

Eine weitere Ausführungsform sieht vor, dass das Temperaturprofil für das Entbindern zumindest eine Aufheizphase und zumindest eine im Wesentlichen isotherme Haltephase aufweist, wobei während der Aufheizphase eine erste mittlere Mikrowellenleistung zugeführt wird, wobei während der Haltephase eine zweite mittlere Mikrowellenleistung zugeführt wird und wobei die zweite mittlere Mikrowellenleistung kleiner als die erste mittlere Mikrowellenleistung ist. Durch die höhere erste Mikrowellenleistung wird der Grünkörper schnell und geregelt auf die Entbinder-Temperatur gebracht ohne dass eine Beschädigung, beispielsweise in Form von Rissen, stattfindet. Während der im Wesentlichen isothermen Haltephase ist die Entbinder-Temperatur schnell und effizient durch Mikrowellenleistung regelbar.

Eine weitere Ausführungsform sieht vor, dass das Temperaturprofil für das Sintern zumindest eine Aufheizphase und zumindest eine im Wesentlichen isotherme Haltephase aufweist, wobei während der Aufheizphase eine dritte mittlere Mikrowellenleistung zugeführt wird, wobei während der Haltephase eine vierte mittlere Mikrowellenleistung zugeführt wird und wobei die vierte mittlere Mikrowellenleistung kleiner als die dritte mittlere Mikrowellenleistung ist. Durch die hohe dritte Mikrowellenleistung während der Aufheizphase wird der Grünkörper schnell und kosteneffizient auf die Sinter-Temperatur erwärmt wobei Sinterhälse zwischen den Partikeln ausgebildet werden, was zu einer deutlich besseren Wärmeleitung führt. Insbesondere nach dem Erreichen der Sinter-Temperatur wird die Mikrowellenleistung reduziert, wobei die konventionelle Wärmequelle eine Gefügevergröberung des bereits vorverdichteten Grünkörpers übernimmt. Während der im Wesentlichen isothermen Haltephase ist die Sinter-Temperatur schnell und effizient durch Mikrowellenleistung regelbar.

Eine weitere Ausführungsform sieht vor, dass beim Sintern nach zumindest einer Haltephase eine Abkühlphase folgt, wobei eine Temperatur während der Abkühlphase durch Zuführung von Mikrowellenleistung geregelt wird. Durch eine mikrowellenbasierte Temperaturregelung während der Abkühlphase wird eine Beschädigung, beispielsweise durch Ausscheidungen, der Materiallage verhindert.

Eine weitere Ausführungsform sieht vor, dass die Materiallage aus Eisen hergestellt ist und eine Dichte von mindestens 6600 kg/m³ aufweist. Unter einer aus Eisen hergestellten Materiallage ist zu verstehen, dass die Materiallage aus Eisen und/oder einer Eisenlegierung, insbesondere einer Eisenbasislegierung, hergestellt ist. Eisenbasislegierungen sind beispielsweise Eisen-Kobalt und Eisen-Silizium. Durch den Einsatz von Mikrowellenerwärmung ist eine derartig hohe Dichte beim Sintern erreichbar.

Eine weitere Ausführungsform sieht vor, dass die Materiallage eine Lagendicke zwischen 0,5 µm und 500 µm aufweist. Bei einer derartigen Dicke wird beispielsweise beim Einsatz in einer elektrischen rotierenden Maschine eine ausreichende Wirbelstrom-Unterdrückung erreicht.

Im Folgenden wird die Erfindung anhand der in den Figuren dargestellten Ausführungsbeispiele näher beschrieben und erläutert.

Es zeigen:
- FIG 1: eine schematische Darstellung eines Herstellungsverfahrens von Materiallagen mit einem Hybrid-Ofen,
- FIG 2: einen vergrößerten Ausschnitt eines Grünkörpers vor dem Entbindern,
- FIG 3: eine schematische Darstellung einer ersten Ausgestaltung eines Temperaturprofils für das Entbindern und Sintern eines Grünkörpers mittels Hybriderwärmung,
- FIG 4: eine schematische Darstellung einer zweiten Ausgestaltung eines Temperaturprofils für das Entbindern und Sintern eines Grünkörpers mittels Hybriderwärmung und
- FIG 5: eine schematische Darstellung eines Herstellungsverfahrens von Materiallagen mit einem Mikrowellen-Ofen,
- FIG 6: eine schematische Darstellung eines Temperaturprofils für das Sintern eines Grünkörpers mittels Mikrowellenerwärmung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

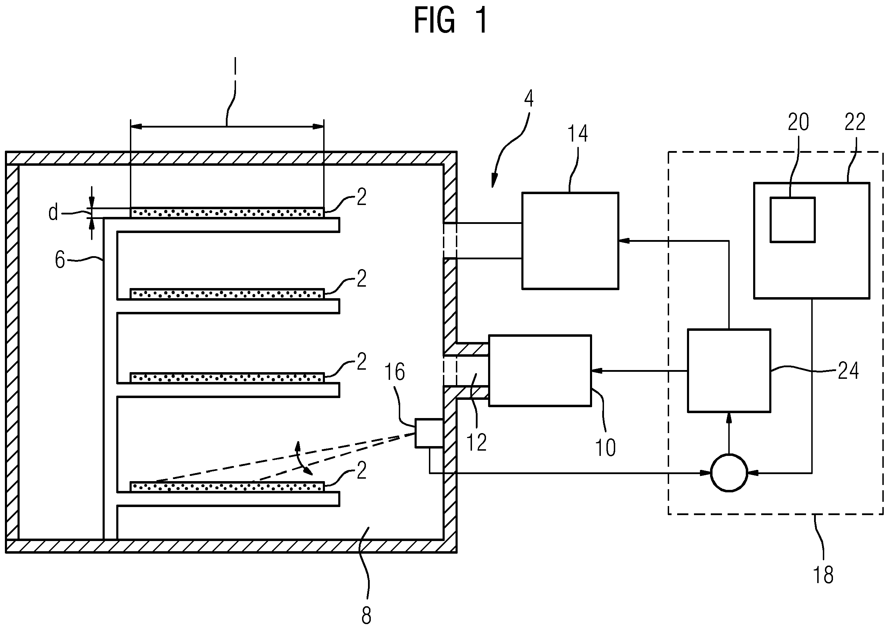

FIG 1 zeigt eine schematische Darstellung eines Herstellungsverfahrens von Materiallagen 2 mit einem Hybrid-Ofen 4, wobei die fertig gesinterten Materiallagen 2 jeweils ein Aspektverhältnis, das heißt ein Verhältnis von maximaler Länge l zu Lagendicke d, von mindestens 50:1, insbesondere von 100:1, auf. Beispielsweise beträgt die fertig gesinterte Lagendicke d zwischen 0,1 µm und 1 mm, insbesondere zwischen 0,5 µm und 500 µm. Im Hybrid-Ofen 4 werden die als Grünkörper vorliegenden Materiallagen 2 entbindert und unmittelbar danach gesintert. Der Hybrid-Ofen 4 ist dafür konfiguriert, die Grünkörper mittels Hybriderwärmung zu entbindern und zu sintern. Die Hybriderwärmung umfasst neben einer Mikrowellenerwärmung zusätzlich eine konventinelle Erwärmung, beispielsweise über Induktionserwärmung, Widerstandserwärmung oder Gasbeheizung. Beispielsweise werden die Grünkörper vor dem Entbindern und Sintern aus einer Suspension, welche ein wenigstens ein, insbesondere organisches, Bindemittel und Festteilchen umfasst, mittels Siebdruckens hergestellt und auf einem Träger 6 positioniert, wobei der Träger 6 aus einem dielektrischen Werkstoff, insbesondere einer Keramik wie Aluminiumoxid, hergestellt ist. Das Bindemittel ist so beschaffen, dass es bei Erwärmung vollständig bzw. nahezu vollständig in gasförmige Bestandteile dissoziiert. Insbesondere sind die Materiallagen 2 als Elektrobleche für eine elektrische Maschine, beispielsweise einen Motor oder einen Generator, ausgeführt, wobei die Festteilchen für ein Elektroblech ein weichmagnetisches Material, beispielsweise Eisen, Nickel, Kobalt und/oder deren Legierungen, enthalten.

Die Grünkörper werden auf dem Träger 6 in einer Kammer 8 des Hybrid-Ofens 4 angeordnet, wobei die Kammer 8 als Resonator für eine Mikrowellenquelle 10 ausgeführt ist. Die Mikrowellenquelle 10 ist insbesondere als Magnetron ausgeführt und beispielhaft über einen Hohlleiter 12 mit der Kammer 8 verbunden. Die Mikrowellenquelle 10 erzeugt elektromagnetische Schwingungen, welche beispielsweise in einem Frequenzbereich von 300 MHz bis 300 GHz liegen. Insbesondere werden elektromagnetische Schwingungen mit Frequenzen erzeugt, die in einem ISM-Band (industrial, scientific and medical application band), beispielsweise bei 915 MHz +/- 13 MHz, 2,45 GHz +/-50 MHz oder 5,8 GHz +/- 75 MHz, liegen. Eine maximale Leistung der Mikrowellenquelle 10 wird in Abhängigkeit des Materials, der Form und der Anzahl der Grünkörper sowie der Größe der Kammer 8 gewählt. Die Mikrowellenleistung ist optional durch mehrere Hohlleiter 12 an unterschiedlichen Positionen zuführbar, um eine homogenere Erwärmung der Grünkörper zu erreichen.

Darüber hinaus umfasst der Hybrid-Ofen 4 eine konventionelle Wärmequelle 14, welche beispielsweise als Induktionswärmequelle, als Widerstandswärmequelle oder als gasbeheizende Wärmequelle ausgeführt ist. Während des Entbinderns und Sinterns wird eine Temperatur zumindest eines Grünkörpers über einen, insbesondere kontaktlosen, Sensor 16 überwacht. Der Sensor 16 ist beispielsweise als Infrarot-Temperatursensor ausgeführt. Die Mikrowellenquelle 10 und die konventionelle Wärmequelle 14 werden von einer Regelungseinrichtung 18 angesteuert, der die Temperatur des zumindest einen Grünkörpers während des Entbinderns und Sinterns anhand eines Temperaturprofils regelt. Das Temperaturprofil ist in einem Speicher 20, beispielsweise in Form einer Look-Up-Table, in einem Sollwertgeber 22 hinterlegt und wird zur Regelung mit der Temperatur des zumindest einen Grünkörpers verglichen. Die ermittelte Abweichung des Ist-Werts vom Soll-Wert wird in einer Steuervorrichtung 24 zur, insbesondere separaten, Ansteuerung der Mikrowellenquelle 10 und der konventionelle Wärmequelle 14 zur Regelung der Temperatur weiterverarbeitet. Optional wird die vom Sensor 16 ermittelte Temperatur zusammen mit einem digitalen Zwilling des Hybrid-Ofens 4 zur Temperaturregelung herangezogen. Darüber hinaus wird durch die Regelungseinrichtung 18 ein Druck und eine Gaszusammensetzung in der Kammer 8 geregelt. Die Regelungseinrichtung 18 weist einen digitalen Logikbaustein auf, der für das Herstellungsverfahren konfiguriert ist. Der digitale Logikbaustein ist beispielswiese als Mikroprozessor, Mikrocontroller, FPGA (field programmable gate array) oder ASIC (application-specific integrated circuit) ausgeführt.

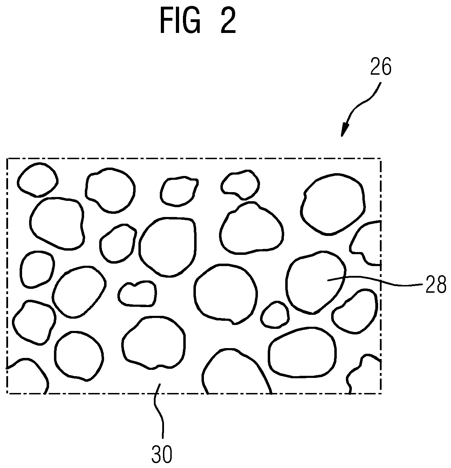

FIG 2 zeigt einen vergrößerten Ausschnitt eines Grünkörpers 26 vor dem Entbindern E, welcher eine Suspension aus-Festteilchen 28 und einem, insbesondere organischen, Bindemittel 30 enthält. Die Festteilchen liegen als Pulver vor und umfassen Teilchen aus elektrisch und/oder magnetisch leitfähigem Material, insbesondere Metallteilchen. Beispielsweise enthalten die Festteilchen Eisen, Nickel, Kobalt und/oder deren Legierungen. Die weitere Ausgestaltung des Grünkörpers 26 in FIG 2 entspricht der in FIG 1.

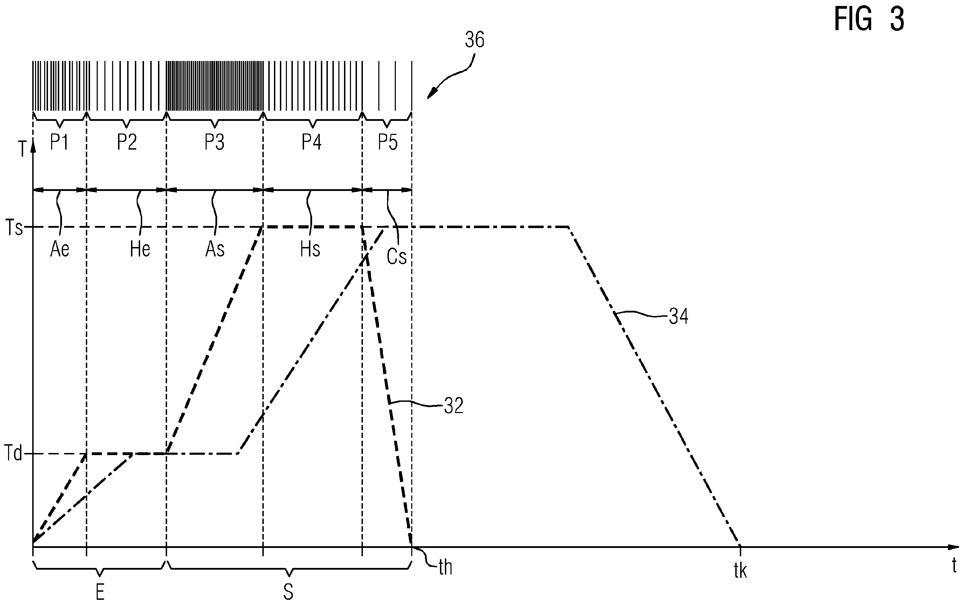

FIG 3 zeigt eine schematische Darstellung einer ersten Ausgestaltung eines Temperaturprofils 32 für das Entbindern E und Sintern S mindestens eines Grünkörpers mittels Hybriderwärmung, wobei zum Vergleich ein Temperaturprofil 34 für das Entbindern E und Sintern S mittels konventioneller Erwärmung dargestellt ist. Die Temperatur T ist qualitativ über die Zeit t aufgetragen. Die Gesamtzeit tk des Temperaturprofils 34 für die konventionelle Erwärmung beträgt beispielsweise 10 Stunden. Die Gesamtzeit th des Temperaturprofils 32 für die Hybriderwärmung ist beispielsweise um 33 % kürzer. Die folgenden Ausführungen beziehen sich auf das Temperaturprofils 32 für das Entbindern E und Sintern S mittels Hybriderwärmung.

Zusätzlich ist in FIG 2 ein Betriebsschema 36 der Mikrowellenquelle 10 für das Entbindern E und Sintern S mittels Hybriderwärmung in Abhängigkeit der Zeit t in Bezug auf das Temperaturprofil 32 dargestellt, wobei ein Pulsbetrieb der Mikrowellenquelle 10 mit Hilfe von senkrechten Strichen dargestellt ist. Die Mikrowellenquelle 10 ist beispielsweise als Magnetron ausgeführt, wobei eine abgegebene Leistung durch einen Tastgrad geregelt wird. Der Tastgrad wird auch Aussteuergrad oder englisch "duty cycle" genannt und errechnet sich aus dem Verhältnis von Impulsdauer zur Periodendauer. Senkrechte Striche mit einem sehr geringen Abstand repräsentieren einen hohen Tastgrad, was einer hohen mittleren Leistung bei konstanter Spitzenleistung entspricht. Ein Dauerstrich-Betrieb wird auch "continuous wave" Betrieb, kurz CW Betrieb, genannt. Die konventionelle Wärmequelle wird während des Entbinder- und Sintervorgangs parallel zur Mikrowellenquelle 10 betrieben.

Der mindestens eine Grünkörper wird sowohl bei der Hybriderwärmung als auch bei der konventionellen Erwärmung zunächst auf eine Entbinder-Temperatur Td und daraufhin auf eine Sinter-Temperatur Ts aufgeheizt. Beim Entbindern E mittels Hybriderwärmung folgt einer, beispielsweise linearen, Aufheizphase Ae eine im Wesentlichen isotherme Haltephase He. Während der Aufheizphase Ae wird eine erste mittlere Mikrowellenleistung P1 zugeführt, wobei während der Haltephase He eine zweite mittlere Mikrowellenleistung P2 zugeführt wird und die zweite mittlere Mikrowellenleistung P2 kleiner als die erste mittlere Mikrowellenleistung P1 ist. Während des Entbinderns E wird das, insbesondere organische, Bindemittel in einer reduzierenden Atmosphäre ausgetrieben, sodass Kohlestoff-Atome aus dem Grünkörper entfernt werden. Die reduzierende Atmosphäre enthält beispielsweise ein Wasserstoff-Stickstoff-Gemisch oder ein Wasserstoff-Edelgas-, insbesondere ein Wasserstoff-Argon-Gemisch bei einem niedrigen Druck von weniger als 100 mbar. Der Stickstoff beziehungsweise das Edelgas fungieren als Spülgas. Die Entbinder-Temperatur Td beträgt hierbei beispielsweise 600 bis 800°C.

Unmittelbar nach der Haltephase He des Entbinderns E folgt eine, beispielsweise lineare, Aufheizphase As für das Sintern S bis zu einer Sinter-Temperatur Ts, welche beispielsweise 1200 bis 1500°C beträgt. Die Aufheizphase As bis zur Sinter-Temperatur Ts findet bei einem niedrigen Druck, beispielsweise 20 mbar statt, wobei eine reduzierende Atomosphäre sinnvoll ist, damit keine Carbonisierung stattfindet und ein möglicher Rest-Kohlenstoff entfernt wird. Die daraufhin folgende, im Wesentlichen isotherme, Haltephase Hs findet in einem Vakuum statt. Beim Sintern S wird während der Aufheizphase As eine dritte mittlere Mikrowellenleistung P3 zugeführt, wobei während der Haltephase Hs eine vierte mittlere Mikrowellenleistung P4 zugeführt wird und die vierte mittlere Mikrowellenleistung P4 kleiner als die dritte mittlere Mikrowellenleistung P3 ist. Insbesondere wird beim Sintern S während der Aufheizphase As eine maximale Leistung der Mikrowellenquelle 10 zugeführt, um die Aufheizphase zu verkürzen. Der Haltephase Hs folgt eine Abkühlphase Cs, wobei die Temperatur während der Abkühlphase Cs durch, insbesondere variable, Zuführung von Mikrowellenleistung P5 geregelt wird, wobei die konventionelle Wärmequelle 14 während der Abkühlphase Cs ausgeschaltet wird.

Die aus dem mindestens eine Grünkörper gesinterte mindestens eine Materiallage 2, welche aus einem metallischen Werkstoff hergestellt ist, weist nach dem Sintern S eine Dichte von zumindest 90 % des zugehörigen schmelzmetallurgisch hergestellten metallischen Werkstoffs auf. Beispielsweise ist die mindestens eine Materiallage 2 aus Eisen, das heißt aus Eisen oder einer Eisenbasislegierung, wie beispielsweise Eisen-Kobalt oder Eisen-Silizium, hergestellt und weist nach dem Sintern S eine Dichte von mindestens 6600 kg/m³ auf.

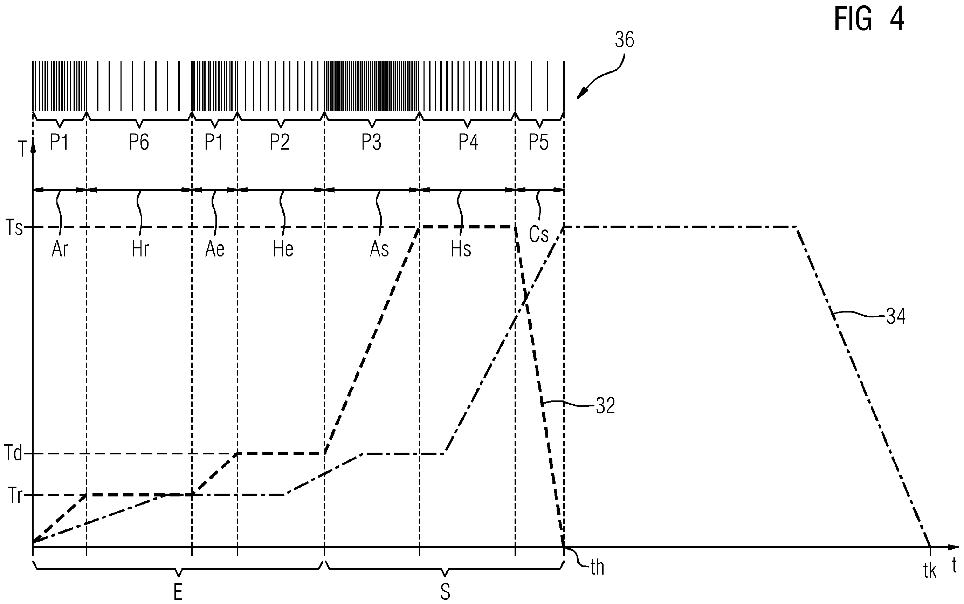

FIG 4 zeigt eine schematische Darstellung einer zweiten Ausgestaltung eines Temperaturprofils 32 für das Entbindern E und Sintern S mindestens eines Grünkörpers mittels Hybriderwärmung, wobei zum Vergleich ein Temperaturprofil 34 für das Entbindern E und Sintern S mittels konventioneller Erwärmung dargestellt ist. Während des Entbinderns E wird der Grünkörper zunächst im Vakuum in einer Reinigungs-Aufheizphase Ar mit der ersten mittleren Mikrowellenleistung P1 auf eine Reinigungstemperatur Tr erwärmt, wobei die Reinigungstemperatur Tr beispielsweise 100 bis 300°c beträgt. Während einer Reinigungs-Haltephase Hr werden Lösungsmittel verdampft und es wird eine Oberflächenreinigung durchgeführt bevor die Aufheizphase Ae für das eigentliche Entbindern E folgt. Die weitere Ausgestaltung des Temperaturprofils 32 in FIG 4 entspricht dem in FIG 3.

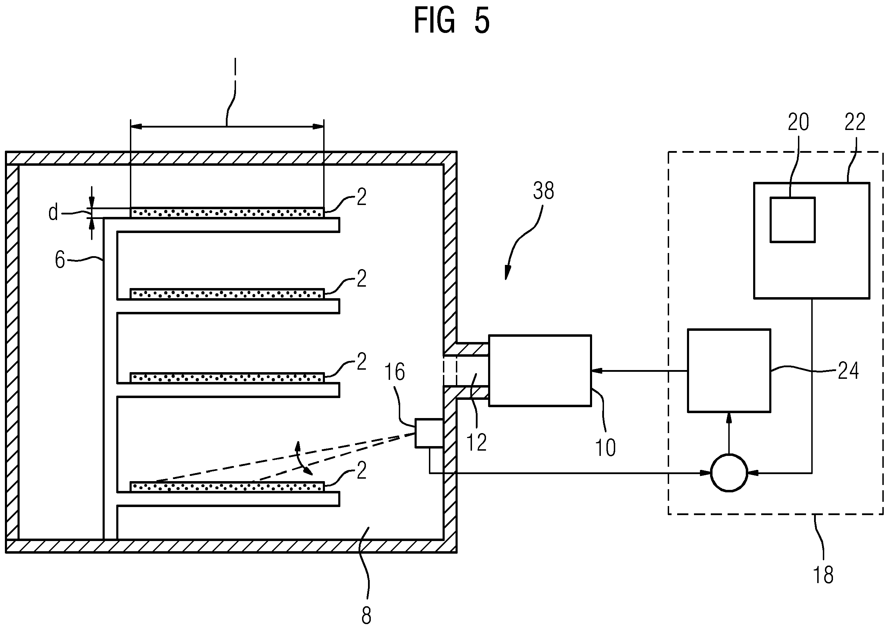

FIG 5 zeigt eine schematische Darstellung eines Herstellungsverfahrens von Materiallagen 2 mit einem Mikrowellen-Ofen 38. Der Sintervorgang erfolgt mittels Mikrowellenerwärmung, welcher von einer Mikrowellenquelle 10 über einen Hohlleiter 12 bereitgestellt wird. Die weitere Ausführung des Herstellungsverfahrens in FIG 5 entspricht dem in FIG 1.

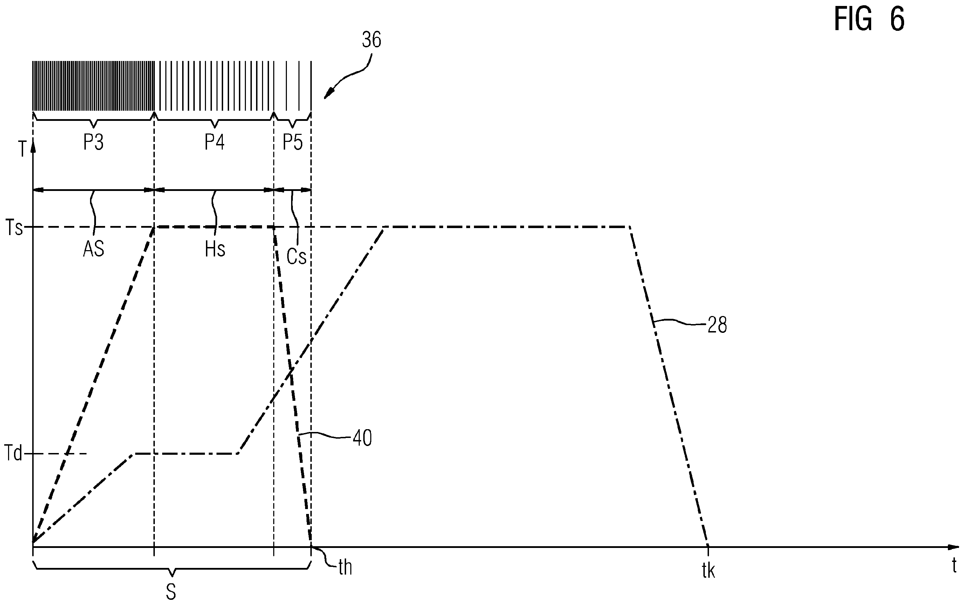

FIG 6 zeigt eine schematische Darstellung eines Temperaturprofils 40 für das Sintern S eines Grünkörpers mittels Mikrowellenerwärmung, wobei ein Mikrowellen-Ofen 38 gemäß FIG 5 zum Einsatz kommt. Der zu sinternde Grünkörper weist dabei entweder kein Bindemittel auf, wobei ein Grünkörper ohne Bindemittel beispielsweise gepresste Festteilchen umfasst, oder der Grünkörper weist Festteilchen mit einem leicht flüchtigen Bindemittel auf, das beim Sintern S in der Aufheizphase As direkt ausgetrieben, insbesondere gecrackt, wird. Leicht flüchtige Bindemittel sind insbesondere aromatische oder aliphatische Öle, beispielsweise Erdölderivate. Der Aufheizphase As folgt eine Haltephase Hs, wobei die zugeführte vierte mittlere Mikrowellenleistung P4 geringer als die fünfte mittlere Mikrowellenleistung P5 während der Aufheizphase As ist. Der Haltephase Hs folgt eine Abkühlphase Cs, wobei die Temperatur während der Abkühlphase Cs durch, insbesondere variable, Zuführung von Mikrowellenleistung P5 geregelt wird. Die weitere Ausgestaltung des Temperaturprofils 40 in FIG 6 entspricht dem in FIG 3.

Zusammenfassend betrifft die Erfindung ein Verfahren zur Herstellung einer, insbesondere metallischen, Materiallage 2. Um, im Vergleich zum Stand der Technik, eine höhere Geschwindigkeit des Herstellungsverfahrens und eine bessere Kostenposition zu erreichen, wird vorgeschlagen, dass ein Grünkörper 26 bereitgestellt wird, welcher Festteilchen 28 umfasst, wobei der Grünkörper 26 bei zumindest einer Sinter-Temperatur Ts gesintert wird und wobei der Grünkörper 26 beim Sintern S zumindest teilweise mittels Mikrowellenenergie erwärmt wird.

## Patentansprüche

1. Verfahren zur Herstellung einer, insbesondere metallischen, Materiallage (2),
wobei ein Grünkörper (26) bereitgestellt wird, welcher Festteilchen (28) umfasst,
wobei der Grünkörper (26) bei zumindest einer Sinter-Temperatur (Ts) gesintert wird,
wobei der Grünkörper (26) beim Sintern (S) zumindest teilweise mittels Mikrowellenenergie erwärmt wird.

2. Verfahren nach Anspruch 1,
wobei der Grünkörper, der zusätzlich ein Bindemittel (30) umfasst, bei zumindest einer Entbinder-Temperatur (Td) entbindert und in einem folgenden Schritt bei zumindest einer Sinter-Temperatur (Ts) gesintert wird,
wobei die Sinter-Temperatur (Ts) höher als die Entbinder-Temperatur (Td) ist,
wobei der Grünkörper (26) beim Entbindern (E) und beim Sintern (S) zumindest teilweise mittels Mikrowellenenergie erwärmt wird.

3. Verfahren nach einem der Ansprüche 1 oder 2,
wobei der Grünkörper (26) mittels Hybriderwärmung entbindert und/oder gesintert wird.

4. Verfahren nach einem der Ansprüche 2 oder 3,
wobei der Grünkörper (26) zumindest teilweise in einer reduzierenden Atmosphäre entbindert wird.

5. Verfahren nach einem der vorherigen Ansprüche,
wobei der Grünkörper (26) zumindest teilweise in einem Vakuum gesintert wird.

6. Verfahren nach einem der vorherigen Ansprüche,
wobei der Grünkörper (26) nach einem vorgegebenen Temperaturprofil (32, 40) erwärmt wird,
wobei eine zugeführte Wärmeenergie anhand einer Temperatur des Grünkörpers (26) geregelt wird.

7. Verfahren nach Anspruch 6,
wobei die Temperatur des Grünkörpers (26) kontaktlos mittels zumindest eines Sensors (16) ermittelt wird.

8. Verfahren nach einem der Ansprüche 6 oder 7,
wobei das Temperaturprofil (32) für das Entbindern (E) zumindest eine Aufheizphase (Ae) und zumindest eine im Wesentlichen isotherme Haltephase (He) aufweist,
wobei während der Aufheizphase (Ae) eine erste mittlere Mikrowellenleistung (P1) zugeführt wird,
wobei während der Haltephase (He) eine zweite mittlere Mikrowellenleistung (P2) zugeführt wird und
wobei die zweite mittlere Mikrowellenleistung (P2) kleiner als die erste mittlere Mikrowellenleistung (P1) ist.

9. Verfahren nach einem der Ansprüche 6 bis 8,
wobei das Temperaturprofil (32) für das Sintern (S) zumindest eine Aufheizphase (As) und zumindest eine im Wesentlichen isotherme Haltephase (Hs) aufweist,
wobei während der Aufheizphase (As) eine dritte mittlere Mikrowellenleistung (P3) zugeführt wird,
wobei während der Haltephase (Hs) eine vierte mittlere Mikrowellenleistung (P4) zugeführt wird und
wobei die vierte mittlere Mikrowellenleistung (P4) kleiner als die dritte mittlere Mikrowellenleistung (P3) ist.

10. Verfahren nach Anspruch 9,
wobei beim Sintern (S) nach zumindest einer Haltephase (Hs) eine Abkühlphase (Cs) folgt,
wobei eine Temperatur während der Abkühlphase (Cs) durch Zuführung von Mikrowellenleistung geregelt wird.

11. Materiallage für ein Blechpaket einer elektrischen rotierenden Maschine, welche nach einem Verfahren nach einem der Ansprüche 1 bis 10 hergestellt ist,
wobei die Materiallage aus einem metallischen Werkstoff hergestellt ist und eine Dichte von zumindest 85 %, insbesondere 90 %, des zugehörigen schmelzmetallurgisch hergestellten metallischen Werkstoffs aufweist.

12. Materiallage (2) nach Anspruch 11,
wobei die Materiallage aus Eisen hergestellt ist und eine Dichte von mindestens 6600 kg/m³ aufweist.

13. Materiallage (2) nach einem der Ansprüche 11 oder 12, aufweisend eine Lagendicke (d) zwischen 0,5 µm und 500 µm.

14. Elektrische Maschine mit einem Blechpaket, welches eine Vielzahl von Materiallagen (2) nach einem der Ansprüche 11 bis 13 aufweist.

15. Regelungseinrichtung (18) mit Mitteln zur Durchführung eines Verfahrens nach einem der Ansprüche 1 bis 10.

16. Computerprogrammprodukt zur Durchführung eines Verfahrens nach einem der Ansprüche 1 bis 10 bei Ablauf in einer Regelungseinrichtung nach Anspruch 15.
